# EUROPEAN PATENT SPECIFICATION

(11) **EP 1 819 778 B1**
(45) Date of publication and mention of the grant of the patent: **12.01.2011**
(21) Application number: 05811522.1
(22) Date of filing: 28.11.2005
(51) Int. Cl.: C09B 41/00, C09D 11/00

(54) **PREPARATION PROCESS OF AZO PIGMENT DISPERSION**
HERSTELLUNGSVERFAHREN FÜR AZOPIGMENTDISPERSION
PROCEDE DE PREPARATION DE DISPERSION DE PIGMENT AZOIQUE

(30) Priority: 03.12.2004 JP 2004351173
(43) Date of publication of application: 22.08.2007
(73) Proprietor: CANON KABUSHIKI KAISHA, Ohta-ku Tokyo 146-8501 (JP)
(72) Inventor: TSUKADA, Mamoru, c/o CANON KABUSHIKI KAISHA, Ohta-ku, Tokyo 1468501 (JP)
(74) Representative: TBK-Patent
(86) International application number: PCT/JP2005/022233
(87) International publication number: WO 2006/059741

(56) References cited:
- EP-A- 0 244 686
- EP-A- 0 244 687
- WO-A-93/16137
- DD-A3- 249 819
- DD-A5- 298 255
- DD-A5- 298 256
- GB-A- 1 080 115
- GB-A- 1 371 706
- GB-A- 1 516 223
- US-A- 4 159 264
- US-A- 4 217 273

## Description

### TECHNICAL FIELD

The present invention relates to a preparation process of an azo pigment dispersion useful as an ink in image recording or the like using an ink-jet system.

### BACKGROUND ART

In recent years, conditions required of inks used in image recording or the like using an ink-jet system have been shifted from dyes to pigments from the viewpoints of light fastness, water fastness and the like. In the case where pigments are used, it is desired to use a dispersion liquid of a nano pigment that is high in dispersibility, more uniform and fine.

However, the preparation of inks used in the ink-jet system involves many steps and at the same time has problems caused by the preparation process itself under the circumstances. First, in commercially available pigments, uniform powder of a nano size cannot be provided from the viewpoint of properties of the pigments themselves. Therefore, there is need of a step of grinding a pigment purchased by means of a dispersing machine such as a ball mill, roll mill or sand mill and then classifying the ground product by a filter, centrifugal separator or the like, and the like. Under the circumstances, it is however extremely difficult to provide a uniform pigment of several tens nanometers even when such grinding is performed.

USA1 2002075369 (corresponding to Japanese Patent Application Laid-Open No. 2002-20673) discloses a process for preparing a pigment dispersion liquid, by which the dispersing efficiency of a self-dispersible pigment subjected to a surface treatment is improved by adding a wetting agent in a step of dispersing the pigment in an aqueous medium.

According to the process disclosed in this publication, it is said that a pigment dispersion liquid excellent in storage stability can be provided. In this process, however, a pigment subjected to a grinding treatment in advance is used, and moreover the process includes a step of surface-treating the pigment and a step of dispersing the surface-treated pigment, and so there is need to add a wetting agent in the dispersing step.

On.the other hand, Japanese Patent Application Laid-Open No. 2002-80743 discloses a preparation process of a pigment composition using a coupling reaction of an azo pigment. The invention set fourth in this publication has as its object the provision of a preparation process of a pigment composition having good separation properties from water when a resulting aqueous pigment suspension is dewatered to reduce water content. This publication discloses a preparation process of a pigment composition, comprising adding a water-insoluble resin solid at ordinary temperatures prior a coupling reaction or during the coupling reaction to mix pigment particles with the resin at the same time as formation of the pigment particles by the coupling reaction. In Examples of this publication, it is disclosed that a resin was added into a pH buffering solution exhibiting acidity in advance, and a tetrazo solution and a coupler solution were added to this pH buffering solution to obtain a pigment composition. In this Example, ink was obtained through steps such as a dewatering treatment, addition of an oily varnish and decantation. The degree of dispersion of the ink obtained herein was 5 µm, and no dispersion containing,particles having a finer particle size of a nanometer order was obtained. In other words, the process disclosed in this publication does not disclose a process for preparing a pigment dispersion containing particles having a fine particle size of a nanometer order by simple steps.

DD 298256,, DD298255,, DD249819,, WO93/16137,, US4159264 as well as GB1371706 all describe specific diazolizing and coupling reaction giving azo pigment preparations.

### DISCLOSURE OF THE INVENTION

It is an object of the present invention to provide a preparation process capable of preparing an azo pigment dispersion containing particles having a fine and uniform particle size by reducing preparation steps as much as possible and using simple steps.

The preparation process of the azo pigment dispersion provided according to the present invention comprises the step of causing a solution containing a diazonium compound to react with a solution containing a coupling agent to prepare an azo pigment dispersion in which an azo pigment is dispersed, wherein the reaction is carried out in the presence of a dispersing agent for dispersing the azo pigment in a solvent and a pH buffering agent having a buffering action under alkaline conditions.

According to the process of the present invention, the synthesis of the azo pigment and the formation of the dispersion are conducted at once, and so the preparation process is simple with reduced number of steps.' In addition, the coupling reaction is carried out in the presence of the pH buffering agent having a buffering action under alkaline conditions, whereby a pigment dispersion containing particles, the particle size of which is relatively uniform and as fine as from several hundreds down to several tens nanometers, can be provided.

### BRIEF DESCRIPTION OF THE DRAWINGS

Fig. 1 is a graph illustrating a size distribution of a dispersion obtained according to the present invention.
Fig. 2 is a graph illustrating a size distribution of a dispersion obtained according to the present invention.
Fig. 3 is a graph illustrating a size distribution of a dispersion obtained according to the present invention.

### BEST MODE FOR CARRYING OUT THE INVENTION

The azo pigments obtained in the present invention have a structure of the following formula

A-N=N-B (1)

Wherein 'A' is an atomic group on an aromatic amine side (diazonium compound side), and B is an atomic group on a coupling agent side. 'A' may be a dis-azo compound or tris-azo compound having the structure of the formula (1).

The azo pigment represented by the formula (1) is obtained by a coupling reaction taken place between a diazotized product of a general aromatic amine and a β-naphthol, β-hydroxynaphthoic anilide, acetoacetic anilide, pyrazolone compound or the like. When 'A' is composed of a plurality of azo compounds as described above, the compound of the formula (1) is desirably a water-refractory or water-insoluble azo pigment as a whole.

In the present invention, the coupling reaction of the diazonium compound with the coupling component is carried out in the presence of a pH-buffering agent having a buffering action under alkaline conditions.

In the present invention, the buffering agent having a pH buffer capacity and a dispersing agent may be caused to coexist together with a strong alkali necessary for the coupling reaction in a reaction liquid on the side of a coupling agent.

The buffering agent is required to be a pH-buffering agent having a buffering action under alkaline conditions. As examples of this agent, may be mentioned primary amines, secondary amines and tertiary amines having saturated or unsaturated alkyl chains, and quaternary ammonium salts such as tetramethylammonium hydroxide. A sulfonic acid derivative of an aliphatic or alicyclic amine, which has a buffer capacity on the alkaline side as found in some Good' buffers, may also be used. Likewise, a carboxylic acid derivative having a buffer capacity on the alkaline side, such as an amino acid, may also be used.

In general, an aromatic amine is hardly soluble in water. However, such an amine may be added, as an amine usable in the present invention, to the solution containing the coupling agent so far as it is soluble in water. At this time, the buffering agent may be used as the pH-buffering agent having a buffering action under an alkaline condition so far as an isoelectric point by an amino group left after neutralization with an alkali resides in the alkaline side even when the buffering agent has an acidic functional group in its molecule.

Phosphoric acid and carbonic acid, which are buffering components for a phosphate buffer and a carbonate/hydrogencarbonate buffer, respectively, that are general buffers over an alkaline range, may be further used.

Specific examples of pH buffering agents having a buffering action under alkaline conditions are mentioned below.

For example, a tris(hydroxymethyl)aminomethane (hereinafter may also be referred to as "TRIS")-hydrochloric acid buffer may be used in a pH range of from 7.2 to 9.0. In this case, hydrochloric acid is added to a solution containing a diazonium compound in advance, TRIS is added to a solution containing a coupling agent in advance, and these two solutions are mixed, whereby the TRIS-hydrochloric acid buffer may be prepared. Alternatively, a TRIS-hydrochloric acid buffer is prepared separately from the two solutions, and this buffer may also be added upon the coupling reaction.

A glycine-sodium hydroxide buffer may also be used in a pH range of from 8.6 to 10.6. A carbonate-hydrogencarbonate buffer may also be used in a pH range of from 9.2 to 10.6. Further, a phosphate buffer may also be used in a pH range of from 7.0 to 8.0. Besides, the so-called Good' buffer may also be used. This buffer will be described subsequently.

The use of the pH-buffering agent having the buffering action under the alkaline conditions is useful for obtaining a transparent dispersion containing particles having an extremely fine particle size. In this regard, some investigations were made and will hereinafter be described.

### Investigation 1:

When tert-butylamine obtained by removing alcoholic OH groups from tris(hydroxymethyl)aminomethane is used, a transparent dispersion can be obtained. On the other hand, when methanol or ethanol is used, a proper dispersion cannot be obtained. From this fact, it is considered that the functional group contributing to dispersion is not the alcoholic OH group present in TRIS, but is a remaining amino group, namely, the dispersion is by virtue of a nature as an amine of TRIS (see EXAMPLE 3). Investigation 2:

When sodium hydroxide having no buffer capacity is used in place of TRIS, a proper dispersion cannot be obtained even when it is added in considerable excess. In other words, the action as the amine of TRIS is not an action as a mere alkali (see EXAMPLE 3).

### Investigation 3:

When ammonia that is simplest is used in place of TRIS, a proper dispersion cannot be obtained. Here, attention is paid to the degree of basicity of the amine. It is then expected that the pH after mixing is shifted toward weak acidity by an excess strong acid (hydrochloric acid) on the side of the solution containing the diazonium salt and a weak base (ammonia) on the side of the solution containing the coupling agent (see EXAMPLE 3).

### Investigation 4:

When a Good's buffering agent, which can make a buffer in a range of from weakly acidic to neutral and to alkaline pH, is used in place of TRIS, it can be confirmed that it is harder to obtain a proper dispersion with those having a buffering action in more acidic regions(see EXAMPLE 4).

In other words, a transparent dispersion is not formed even when a mere excess alkali is present, and a solution obtained after mixing the solution containing the diazonium salt with the solution containing the coupling agent is alkaline. It is rather essential that a pH-buffering agent having a buffer action under alkaline conditions is present upon the mixing (coupling reaction).

It is considered that when the pH is rapidly changed by the coupling reaction, the buffering agent having the buffer action under alkaline conditions inhibits the change, and growth of pigment particles is controlled to give a chance that a dispersing agent polymer adheres to the surfaces of the pigment particles.

As dispersing agents usable in the present invention, may be mentioned, in the case of polymers, alkali-soluble block copolymers or random copolymers composed of at least two monomers selected from styrene, styrene derivatives, vinylnaphthalene derivatives, aliphatic alcohol esters of α,β-ethylenically unsaturated carboxylic acids, acrylic acid, acrylic acid derivatives, maleic acid, maleic acid derivatives, itaconic acid, itaconic acid derivatives, fumaric acid, fumaric acid derivatives, etc., or salts of these copolymers, and mainly anionic polymers and nonionic polymers of the above-mentioned monomers.

In the case of surfactants, higher fatty acid salts, alkylsulfonates, alkyl ether sulfates, alkyl ester sulfates, alkyl aryl ether sulfates, alkylsulfonates, sulfosuccinates, alkylallyl- and alkylnaphthalene- sulfonates, alkylphosphates, polyoxyethylene alkyl ether phosphate salts, alkyl allyl ether phosphates, dimethylalkyllaurylbetaines, alkylglycines, alkyl- di(aminoethyl)glycines, imidazolinium betaine, polyoxyethylene alkyl ethers, polyoxyethylene alkyl allyl ethers, polyoxyethylene polyoxypropylene glycol, glycerol esters, sorbitan esters, sucrose esters, polyoxyethylene ethers of glycerol esters, polyoxyethylene ethers of sorbitan esters, polyoxyethylene ethers of sorbitol esters, fatty acid alkanolamides, polyoxyethylene fatty acid amides, amine oxides, polyoxyethylene alkylamines, etc. may be mentioned. Further, a surfactant and a dispersing agent polymer may also be used in combination.

In the present invention, an azo pigment dispersion can be prepared by mixing a solution containing a coupling agent, for example, an alkaline solution, and a solution containing a diazonium compound, for example, an acidic solution, in arbitrary proportions. Incidentally, the amount of the dispersing agent may be equivalent to or less than the weight of a pigment formed. Greater particles can be obtained with decreasing the amount of the dispersing agent.

With respect to the amount of the buffering agent, it is only necessary that the buffering agent is added in at least an amount sufficient to become a buffer composition required to neutralize excess hydrochloric acid in the solution containing the diazonium compound and exhibit a buffering action on the alkaline side. The amount of the buffering agent may be less than the sum total of an amount equivalent to the acid value of the dispersing agent polymer, molecules of a pigment to be formed and molecules of the above-described excess hydrochloric acid.

Incidentally, with respect to the diazonium salt and coupling agent added, plural diazonium salts and coupling agents may be mixed into the respective solutions when it is considered that the same reactions take place in spite of some difference of functional group.

In order to use the dispersion according to the present invention as ink used in ink-jet printers, additives such as preservatives, pH adjustors, viscosity modifiers and surfactants may be blended as needed. The pH adjustor may be replaced by the buffering agent according to the present invention and is not always added.

The surfactant is an important element from the viewpoints of adjusting the surface tension and viscosity of ink, making ejection of ink from an ink-jet head easy and improving the penetrability of ink into paper and of antifoaming property. As those satisfying such requirements, it is generally known to add a polyhydric alcohol having an ether linkage in its molecule, such as Acetylenol.

Tris(hydroxymethyl)aminomethane that is a buffering agent according to the present invention is a polyhydric alcohol having an amino group and has both role as a pH adjustor by the amino group and role as a surfactant in combination, so that there is no objection to using the dispersant according to the present invention as an ink as it is.

### EXAMPLES

### (EXAMPLE 1)

### (Preparation of Solution A)

To 75 g of ultra pure water and 5.45 g (0.052 mol) of 35% hydrochloric acid are added 3.45 g (0.021 mol) of 2-methoxy-4-nitroaniline, and the resultant mixture is cooled to 0°C with stirring in an ice bath to which methanol has been added. Thereafter, 1.45 g (0.021 mol) of sodium nitrite is dissolved in 2 ml of water, and the solution is then added to the mixture. After stirring the mixture for 60 minutes, 0.2 g (0.0021 mol) of sulfamic acid is added to eliminate nitrous acid, thereby preparing a diazonium, salt solution.

### (Preparation of Solution B)

In 75 g of ultra pure water is dissolved 4.45 g (0.0214 mol) of o-acetoacetoanisidide together with 1.244 g (0.0311 mol) of sodium hydroxide to prepare a coupler solution.

### (Synthesis of Pigment Yellow (PY) 74 dispersion)

In 1 ml of Solution B is dissolved 0.03 g of a styrene-acrylic acid copolymer (molecular weight: 4,479, compositional ratio of acrylic acid/styrene = 3:7, acid value: 198.6). A1M solution of tris(hydroxymethyl)- aminomethane prepared in advance is added to this solution so as to give a concentration of 10 mM to prepare Liquid C.

### (Preparation (1) of dispersion)

With 990 µl of ultra pure water is mixed 10 µl of Liquid C to prepare 1 ml of a 100-fold diluted liquid. Similarly, 1 ml of a 100-fold diluted liquid of Solution A is prepared, and both liquids are mixed at a ratio of 1:1.

### (Preparation (2) of dispersion)

One milliliter of a 50-fold diluted liquid of Liquid C and 1 ml of a 50-fold diluted liquid of Solution A are prepared, and both liquids are mixed at a ratio of 1:1.

### (Measurement of particle size distribution by DLS 7000)

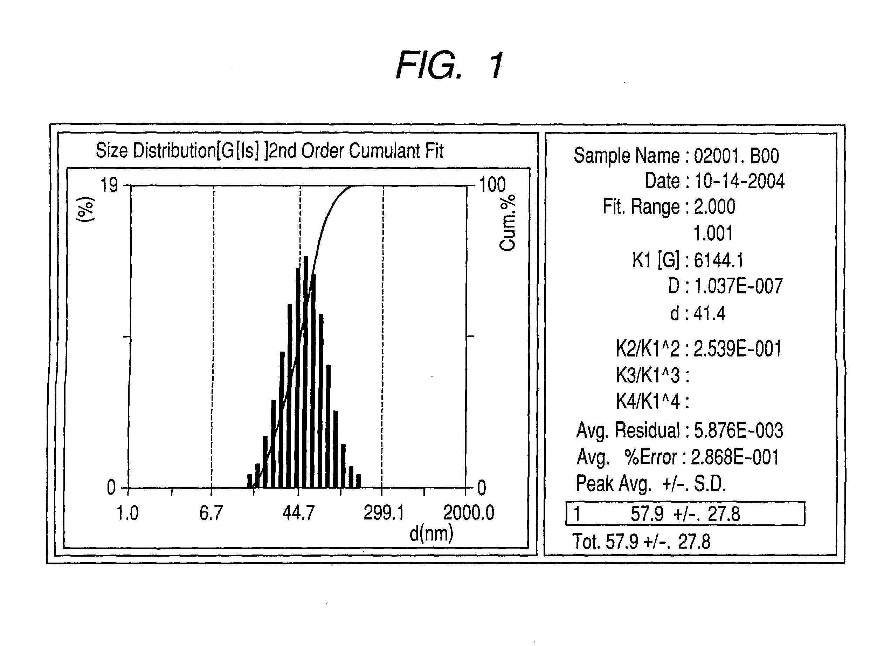

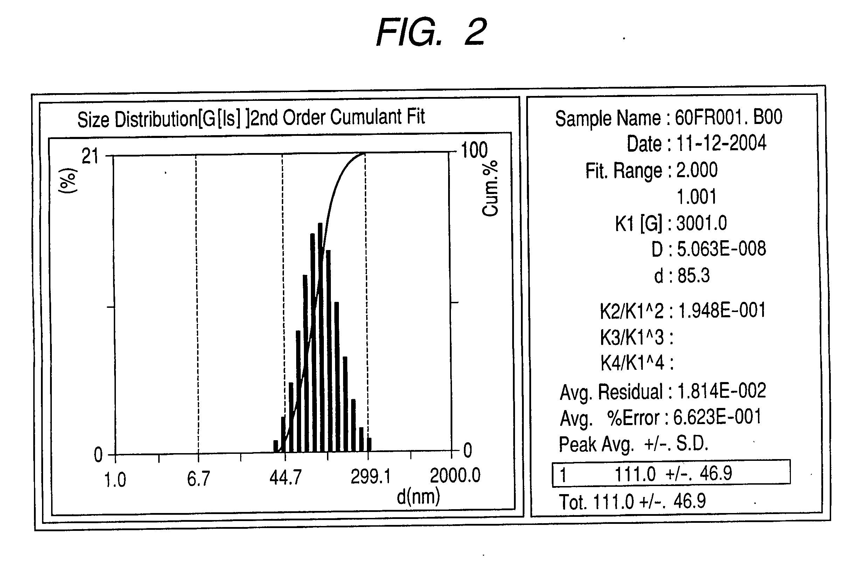

After the dispersions obtained in the above preparations (1) and (2) were diluted with ultra pure water so as to give a concentration of 1/1,000 based on Solution A, particle size distributions of particles contained in the dispersions were measured by means of a light scattering spectrophotometer DLS 7000 (manufactured by Otsuka Electronics Co., Ltd.). The result of preparation (1) and the result of preparation (2) are shown in Fig. 1 and Fig. 2, respectively. In Fig. 1 and Fig. 2, an axis of abscissa and an axis of ordinate in the graph indicate the particle size (nm) and the number of particles measured, respectively.

In Fig. 1, the average value of the particle size distribution of the resultant dispersion was 57.9 nm, and the standard deviation was 27.8.

In Fig. 2, the average value of the particle size distribution of the resultant dispersion was 110.0 nm, and the standard deviation was 46.9.

From these facts, it is understood that a dispersion, which is uniform in particle size and has a desired particle size may be obtained by changing the concentration of Solution B (coupling component and buffering agent) to react with Solution A.

### (EXAMPLE 2)

In an ink for ink-jet printers, a pigment concentration of from 2 to 5% is generally used.

In order to meet such need, it is attempted to prepare a dispersion high in pigment concentration.

### (Preparation of Solution A)

Solution A is prepared in the same manner as in EXAMPLE 1.

### (Preparation of Solution B)

In 75 g of ultra pure water is dissolved 4.45 g (0.0214 mol) of o-acetoacetoanisidide together with 2.23 g of sodium hydroxide, and 7.88 g (weight equivalent to a pigment to be formed) of a styrene-acrylic acid copolymer is dissolved in the above-prepared solution. Further, 3.96 g of tris(hydroxymethyl)aminomethane is added to prepare a coupler solution.

### (Synthesis of Pigment Yellow (PY) 74 dispersion)

The whole quantity of Solution A is mixed with the whole quantity of Solution B.

### (Measurement of particle size distribution by DLS 7000)

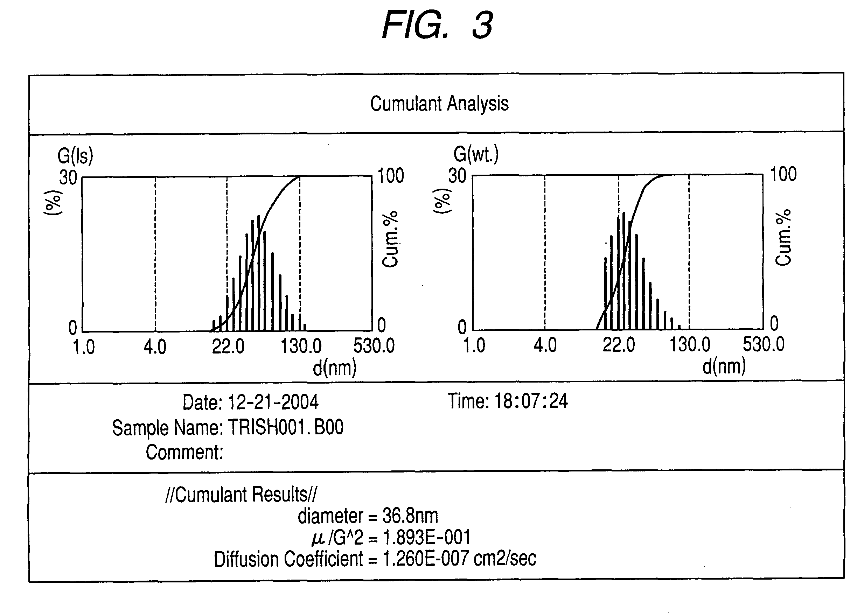

After the dispersion obtained above was diluted to a concentration of 1/3,000 with ultra pure water, the particle size distribution of particles contained in the dispersion was measured by means of a light scattering spectrophotometer DLS 7000 (manufactured by Otsuka Electronics Co., Ltd.). The result is shown in Fig. 3. In Fig. 3, the average value of the particle size distribution of the resultant dispersion was 36.8 nm.

### (EXAMPLE 3)

In this example, cases where a buffering agent was variously changed in the synthesis of a Pigment Yellow (PY) 74 dispersion are shown. Solution A was prepared in the same manner as in EXAMPLE 2. Solution B containing no buffering agent was prepared in the following manner.

### (Preparation of Solution A containing no buffering agent)

In 7.19 ml of 1N aqueous solution of sodium hydroxide is dissolved 0.593 g of o-acetoacetoanisidide, and 1.05 g of a styrene-acrylic acid copolymer is then dissolved. Pure water (2.81 ml) is added thereto.

### (Preparation of buffering agent and confirmatory experiment of synthesis of Pigment Yellow (PY) 74 dispersion)

After various buffering agents were separately added to 50 µl of Solution B containing no buffering agent so as to contain 43.6 µmol of the buffering agent, the quantity of the resultant mixture was adjusted to 100 µl as a whole. On the other hand, Solution A was diluted so as to give a concentration of 1/2. 100 µl of diluted Solution A and 100 µl of Solution B were mixed at a ratio of 1:1 to visually observe the transparency of the resultant mixture. The results are shown collectively in Table 1. When each of buffering agents (1) to (7) was added, a transparent proper dispersion was obtained (indicated by o). When each of buffering agents (8) to (11) was used, a proper dispersion was not obtained (indicated by x). Even when the quantities of the buffering agents (8) to (11)(x) were changed to 2 or 3 times, no proper dispersion could be obtained.

**Table 1**

| Buffering agent | | Transparency of dispersion |
|---|---|---|
| (1) | Monoethylamine | O |
| (2) | Diethylamine | O |
| (3) | Triethylamine | O |
| (4) | Tetramethylammonium hydroxide | O |
| (5) | tert-Butylamine | O |
| (6) | Disodium hydrogenphosphate | O |
| (7) | Sodium hydrogencarbonate | O |
| (8) | Ammonia | x |
| (9) | Sodium hydroxide | x |
| (10) | Methanol | x |
| (11) | Ethanol | x |

### (EXAMPLE 4 and COMPARATIVE EXAMPLE 1)

The pH ranges in which Good's buffering agents can exhibit a buffering action are shown in Table 2. On the basis of these ranges, the relationship between dispersibility by a buffering agent and pH was confirmed. Dispersions were prepared in accordance with the process described in EXAMPLE 3. When a sulfonic group was introduced, however, sodium hydroxide was added in a molar amount equivalent to the functional group.

As a result, with respect to compounds having pKa lower than that of MOPS (BES, MOPSO, ACES, PIPEP, ADA Bis-Tris and MES), no dispersion was obtained. With respect to MOPS, TES HEPES and DIPSO, dispersions were obtained but opaque. When those having pKa not lower than that of TAPSO, i.e., TAPSO to CAPS, were used, transparent dispersions were obtained. From this fact, it was confirmed that the use of a buffering agent having a buffering action under alkaline conditions is effective for preparing a transparent dispersion.

**Table 2**

| PKa (20°C) | Compound | 5 | 6 | 7 | 8 | 9 | 10 | 11 |
|---|---|---|---|---|---|---|---|---|
| 6.15 | MES | 5.5 - 7.0 | | | | | | |
| 6.46 | Bis-Tris | 5.7 - 7.3 | | | | | | |
| 6.60 | ADA | 5.8 - 7.4 | | | | | | |
| 6.80 | PIPES | | 6.1 - 7.5 | | | | | |
| 6.90 | ACES | | 6.0 - 7.5 | | | | | |
| 6.95 | MOPSO | | 6.2 - 7.4 | | | | | |
| 7.15 | BES | | 6.6 - 8.0 | | | | | |
| 7.20 | MOPS | | 6.5 - 7.9 | | | | | |
| 7.50 | TES | | 6.8 - 8.2 | | | | | |
| 7.55 | HEPES | | 6.8 - 8.2 | | | | | |
| 7.6 | DIPSO | | 6.9 - 8.1 | | | | | |
| 7.7 | TAPSO | | | 7.0 - 8.2 | | | | |
| 7.85 | POPSO | | | 7.2 - 8.5 | | | | |
| 7.9 | HEPPSO | | | 7.4 -8.6 | | | | |
| 8.0 | EPPS | | | 7.5 -8.5 | | | | |
| 8.15 | Tricine | | | 7.8 - 8.8 | | | | |
| 8.35 | Bicine | | | 7.7 - 9.1 | | | | |
| 8.4 | TAPS | | | 7.7 - 9.1 | | | | |
| 9.5 | CHES | | | | 8.6 - 10.0 | | | |
| 10.0 | CAPSO | | | | | 9.3 - 10.7 | | |
| 10.40 | CAPS | | | | | 9.7 - 11.1 | | |

### (EXAMPLE 5)

In order to confirm dispersibility in the case where an amine, into which a carboxyl group has been introduced, is used as observed in an amino acid, glycine was used to prepare a dispersion in the same manner as in EXAMPLES 1 and 2. As a result, a transparent dispersion was obtained.

### (EXAMPLE 6)

Igepal CO-990 (trade name, product of Sigma-Aldrich Japan K.k.; Mn: about 4,626)) that is a nonionic polymer was added in an amount equivalent to the weight of the pigment in place of the styrene-acrylic acid copolymer to prepare a dispersion in the same manner as in EXAMPLES 1 and 2. As a result, a transparent dispersion was obtained.

### (EXAMPLE 7)

### (Preparation of Solution A)

In 75 g of ultra pure water is dispersed 5 g (0.021 mol) of 3-amino-4-methoxybenzanilide, and the resultant dispersion is cooled to 0°C with stirring in an ice bath to which methanol has been added. Further, 6 g (0.058 mol) of 35% hydrochloric acid is added, and the resultant mixture is stirred for 10 minutes. Thereafter, 1.45 g (0.021 mol) of sodium nitrite is dissolved in 2 ml of ultra pure water, and the solution is then added to the mixture. After stirring the mixture for 60 minutes, 0.2 g (0.002 mol) of sulfamic acid is added to eliminate nitrous acid, thereby preparing a diazonium salt solution.

### (Preparation of Solution B)

In 75 g of ultra pure water is dissolved 6.96 g (0.021 mol) of N-(5-chloro-2-methoxyphenyl)-3-hydroxy-2- naphthalene carboxyamide together with 2.5 g (0.0625 mol) of sodium hydroxide at 90°C, and the resultant solution is cooled back to room temperature to prepare a coupler solution.

### (Synthesis of Pigment Red (PR) 269 dispersion)

In 1 ml of Solution B is dissolved 0.03 g of a styrene-acrylic acid copolymer, and a1M solution of tris(hydroxymethyl)aminomethane prepared in advance is added to this solution so as to give a concentration of 10 mM to prepare Liquid C.

### (Preparation (3) of dispersion)

With 990 µl of ultra pure water is mixed 10 µl of Liquid C to prepare 1 ml of a 100-fold diluted liquid. Similarly, 1 ml of a 100-fold diluted liquid of Solution A is prepared, and both liquids are mixed at a ratio of 1:1.

### (Preparation (4) of dispersion)

One milliliter of a 50-fold diluted liquid of Liquid C and 1 ml of a 50-fold diluted liquid of Solution A are prepared, and both liquids are mixed at a ratio, of 1:1.

The dispersions obtained in the above preparations (3) and (4) are measured by means of DLS 7000 in the same manner as in the dispersions obtained by preparations (1) and (2). As a result, it was found that dispersions having average particle sizes of about 40 nm and about 80 nm, respectively, were obtained.

### (EXAMPLE 8)

The yellow pigment dispersion prepared in EXAMPLE 2 was refilled into an ink tank BC1-7Y of an ink-jet printer PIXUS iP4100 (trade name, manufactured by Canon Inc.) to evaluate its printability.

### 1. Fixability:

After conducting solid printing, the same paper as that used in the printing was placed on the printed surface to evaluate the fixability with the number of seconds required until stain was not caused. As a result, stain was not caused in shorter than 20 seconds, and so the fixability of the dispersion was good.

### 2. Character quality:

Half-size English characters and numerals were printed to visually observe whether bleeding and/or feathering occurred or not. As a result, bleeding and feathering were scarcely conspicuous, and so the character quality was good.

### 3. Water fastness

After half-size English characters and numerals were printed on 2 sheets of paper, one sheet of paper was immersed overnight in a container containing water, taken out of the container and then air-dried to visually evaluate it as to the water fastness. As a result, ink bleeding or the like was not observed compared with the sheet of paper that was not immersed in water.

This application claims priority from Japanese Patent Application No. 2004-351173 filed December 3, 2004, which is hereby incorporated by reference herein.

## Claims

1. A process for preparing an azo pigment dispersion, comprising the step of causing a solution containing a diazonium compound to react with a solution containing a coupling agent to prepare an azo pigment dispersion in which an azo pigment is dispersed, wherein the reaction is carried out in the presence of a dispersing agent for dispersing the azo pigment in a solvent and a pH buffering agent having a buffering action under alkaline conditions.

2. The preparation process according to claim 1, wherein the dispersing agent and the pH buffering agent are dissolved in the solution containing the coupling agent.

3. The preparation process according to claim 1, wherein the solution containing the diazonium compound is an acidic solution, and the solution containing the coupling agent is an alkaline solution.

4. The preparation process according to claim 3, wherein the acidic solution contains hydrochloric acid.

5. The preparation process according to claim 4, wherein the pH buffering agent is present in an amount sufficient to neutralize hydrochloric acid remaining after the neutralization reaction of the acidic solution with the alkaline solution to further impart alkalinity.

6. The preparation process according to claim 1, wherein the pH buffering agent contains any of an amine, an amino acid, phosphoric acid and carbonic acid.

7. The preparation process according to claim 1, wherein the amine includes tris(hydroxymethyl)-aminomethane.

8. The preparation process according to claim 1, wherein the dispersing agent is selected from the group consisting of an anionic polymer and a nonionic polymer.

9. The preparation process according to claim 8, wherein the anionic polymer includes a styrene-acrylic acid copolymer.

10. The preparation process according to claim 1, wherein 2-methoxy-4-nitroaniline is used as a material of the diazonium compound, and o-acetoacetbanisidide is used as the coupling agent, thereby obtaining Pigment Yellow 74.

11. The preparation process according to claim 1, wherein 3-amino-4-methoxybenzanilide is used as a material of the diazonium compound; and N-(5-chloro-2- methoxyphenyl)-3-hydroxy-2-naphthalene carboxyamide is used as the coupling agent, thereby obtaining Pigment Red 269.

## Patentansprüche

1. Verfahren zur Herstellung einer Azopigmentdispersion, umfassend den Schritt des Bewirkens, dass eine Lösung, die eine Diazoniumverbindung enthält, mit einer Lösung reagiert, die ein Kupplungsmittel enthält, um eine Azopigmentdispersion herzustellen, in welcher ein Azopigment dispergiert ist, wobei die Reaktion in der Anwesenheit eines Dispersionsmittels zum Dispergieren des Azopigments in einem Lösungsmittel und eines pH-Puffermittels mit einer Pufferwirkung unter alkalischen Bedingungen ausgeführt wird.

2. Herstellungsverfahren nach Anspruch 1, wobei das Dispersionsmittel und das pH-Puffermittel in der Lösung, die das Kupplungsmittel enthält, gelöst werden.

3. Herstellungsverfahren nach Anspruch 1, wobei die Lösung, die die Diazoniumverbindung enthält, eine saure Lösung ist, und die Lösung, die das Kupplungsmittel enthält, eine alkalische Lösung ist.

4. Herstellungsverfahren nach Anspruch 3, wobei die saure Lösung Salzsäure enthält.

5. Herstellungsverfahren nach Anspruch 4, wobei das pH-Puffermittel in einer Menge vorhanden ist, die ausreicht, um die Salzsäure zu neutralisieren, die nach der Neutralisationsreaktion der sauren Lösung mit der alkalischen Lösung verbleibt, um weitere Alkalität zu verleihen.

6. Herstellungsverfahren nach Anspruch 1, wobei das pH-Puffermittel eines aus einem Amin, einer Aminosäure, Phosphorsäure und Carbonsäure enthält.

7. Herstellungsverfahren nach Anspruch 1, wobei das Amin Tris(Hydroxymethyl)-Aminomethan enthält.

8. Herstellungsverfahren nach Anspruch 1, wobei das Dispersionsmittel ausgewählt ist aus der Gruppe bestehend aus einem anionischen Polymer und einem nichtionischen Polymer.

9. Herstellungsverfahren nach Anspruch 8, wobei das anionische Polymer ein Styrol-Acrylsäurecopolymer enthält.

10. Herstellungsverfahren nach Anspruch 1, wobei 2-Methoxy-4-Nitroanilin als ein Material für die Diazoniumverbindung verwendet wird, und o-Acetoacetoanisidid als das Kupplungsmittel verwendet wird, wodurch Pigment Yellow 74 erhalten wird.

11. Herstellungsverfahren nach Anspruch 1, wobei 3-Amino-4-Methoxybenzanilid als ein Material für die Diazoniumverbindung verwendet wird, und N-(5-Chloro-2-Methoxyphenyl)-3-Hydroxy-2-Naphtalencarboxyamid als das Kupplungsmittel verwendet wird, wodurch Pigment Red 269 erhalten wird.

## Revendications

1. Procédé pour la préparation d'une dispersion d'un pigment azoïque, comprenant l'étape consistant à amener une solution contenant un composé de diazonium à réagir avec une solution contenant un agent de couplage pour préparer une dispersion de pigment azoïque, dans laquelle un pigment azoïque est dispersé, dans lequel la réaction est conduite en présence d'un agent dispersant pour la dispersion du pigment azoïque dans un solvant et un agent de tamponnement du pH ayant une action tampon dans des conditions alcalines.

2. Procédé de préparation suivant la revendication 1, dans lequel l'agent dispersant et l'agent de tamponnement du pH sont dissous dans la solution contenant l'agent de couplage.

3. Procédé de préparation suivant la revendication 1, dans lequel la solution contenant le composé de diazonium est une solution acide, et la solution contenant l'agent de couplage est une solution alcaline.

4. Procédé de préparation suivant la revendication 3, dans lequel la solution acide contient de l'acide chlorhydrique.

5. Procédé de préparation suivant la revendication 4, dans lequel l'agent de tamponnement du pH est présent en une quantité suffisante pour neutraliser l'acide chlorhydrique restant après la réaction de neutralisation de la solution acide avec la solution alcaline pour conférer en outre une alcalinité.

6. Procédé de préparation suivant la revendication 1, dans lequel l'agent de tamponnement du pH contient l'un quelconque des composés consistant en une amine, un aminoacide, de l'acide phosphorique et de l'acide carbonique.

7. Procédé de préparation suivant la revendication 1, dans lequel l'amine comprend le tris(hydroxyméthyl)-amino-méthane.

8. Procédé de préparation suivant la revendication 1, dans lequel l'agent dispersant est choisi dans le groupe consistant en un polymère anionique et un polymère non ionique.

9. Procédé de préparation suivant la revendication 8, dans lequel le polymère anionique comprend un copolymère styrène-acide acrylique.

10. Procédé de préparation suivant la revendication 1, dans lequel de la 2-méthoxy-4-nitroaniline est utilisée comme substance du composé de diazonium, et du o-acéto-acétoanisidide est utilisé comme agent de couplage, ce qui permet d'obtenir le pigment jaune Pigment Yellow 74.

11. Procédé de préparation suivant la revendication 1, dans lequel du 3-amino-4-méthoxybenzanilide est utilisé comme substance du composé de diazonium, et du N-(5-chloro-2-méthoxyphényl)-3-hydroxy-2-naphtalènecarboxamide est utilisé comme agent de couplage, ce qui permet d'obtenir le pigment rouge Pigment Red 269.
